(19) Europäisches Patentamt / European Patent Office / Office européen des brevets

(11) **EP 3 208 970 A1**

(12) **EUROPEAN PATENT APPLICATION**
published in accordance with Art. 153(4) EPC

(43) Date of publication:
**23.08.2017 Bulletin 2017/34**

(21) Application number: **14884768.4**

(22) Date of filing: **19.11.2014**

(51) Int Cl.:
**H04L 12/24** (2006.01)

(86) International application number:
**PCT/CN2014/091688**

(87) International publication number:
**WO 2015/131558 (11.09.2015 Gazette 2015/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.10.2014 CN 201410542079**

(71) Applicant: ZTE Corporation
**Shenzhen, Guangdong 518057 (CN)**

(72) Inventors:
• **DU, Jiaqiang**
  **Shenzhen**
  **Guangdong 518057 (CN)**
• **WEN, Xiulin**
  **Shenzhen**
  **Guangdong 518057 (CN)**

(74) Representative: **Regimbeau**
**20, rue de Chazelles**
**75847 Paris Cedex 17 (FR)**

(54) **ALARM CORRELATION DATA MINING METHOD AND DEVICE**

(57) An alarm correlation data mining method and apparatus are provided. The method includes: obtaining alarm data in a set range and extracting an alarm code, a site ID, and a device ID; generating a matrix according to the extracted alarm code, site ID, and device ID, and obtaining an alarm occurrence frequency, an alarm-to-alarm distance and a connection strength; obtaining an alarm group clustering set according to the alarm occurrence frequency and the alarm-to-alarm distance; and mining a frequent path according to the alarm group clustering set and the connection strength. The embodiment of the present disclosure effectively integrates alarm codes, alarm positions, time sequences and occurrence frequencies in conjunction with telecommunication alarm characteristics and a data mining algorithm, and proposes to store information of alarms in multiple dimensions with a matrix and a correlation relationship between the alarms is effectively and rapidly mined, thereby improving the operation and maintenance efficiency.

S100
Obtain alarm data in a set range, and extract an alarm code, site ID, and device ID

S200
Generate a matrix according to the extracted alarm code, site ID, and device ID, and obtain an alarm occurrence frequency, an alarm-to-alarm distance and a connection strength

S300
Obtain an alarm group clustering set according to the alarm occurrence frequency and the alarm-to-alarm distance

S400
Mine a frequent path according to the alarm group clustering set and the connection strength

**FIG.1**

**Description**

**TECHNICAL FIELD**

The present disclosure relates to the field of an alarm correlation data mining technology, and particularly relates to an alarm correlation data mining method and apparatus.

**BACKGROUND**

A main task of modem telecommunication network management is to monitor a network in real time and ensure efficient, reliable, economical and safe operation of a telecommunication network. With the rapid development of a telecommunication technology, there are millions of alarms in the telecommunication network every day, and these mass alarms contain a great deal of information, such as alarm time, level, device, regional distribution, distribution of a life cycle of each alarm, as well as an internal relationship between the alarms. It is an urgent problem to be solved to quickly find alarm correlation information in the telecommunication network from mass alarm data, so as to help the network management personnel to deal with network failures.

**SUMMARY**

The present disclosure aims to provide an alarm correlation data mining method and apparatus, which are intended to solve the problem of quickly finding alarm correlation information in the telecommunication network from mass alarm data.

In order to solve the above-mentioned problem, the following technical solutions are adopted.

An alarm correlation data mining method is provided, the alarm correlation data mining method includes:

obtaining alarm data in a set range and extracting an alarm code, a site ID, and a device ID from the alarm data;

generating a matrix according to the extracted alarm code, site ID, and device ID, and obtaining an alarm occurrence frequency, an alarm-to-alarm distance and a connection strength according to the generated matrix;

obtaining an alarm group clustering set according to the alarm occurrence frequency and the alarm-to-alarm distance; and

mining a frequent path according to the alarm group clustering set and the connection strength.

Alternatively, the set range includes a set time and a set device.

The step of obtaining alarm data in a set range and extracting an alarm code, a site ID, and a device ID from the alarm data includes:

obtaining the alarm data within a set time and alarm data of a set device, and extracting the alarm code, the site ID and the device ID from the alarm data.

Alternatively, the matrix includes a transaction matrix and an ergodic matrix.

The step of generating a matrix according to the extracted alarm code, site ID, and device ID and obtaining an alarm occurrence frequency, an alarm-to-alarm distance and a connection strength according to the generated matrix includes:

generating the transaction matrix in which the alarm code indicates a row where an element of the transaction matrix is located and the device ID or site ID indicates a column where the element is located, and generating the ergodic matrix in which the alarm code indicates a row where an element of the ergodic matrix is located and another alarm code indicates a column where the element of the ergodic matrix is located.

Alternatively, the step of obtaining an alarm group clustering set according to the alarm occurrence frequency and the alarm-to-alarm distance includes:

comparing the alarm occurrence frequency with a preset frequency threshold to select alarm codes the alarm occurrence frequency of which is greater than or equal to the preset frequency threshold;

comparing the alarm-to-alarm distance of the selected alarm code, the alarm occurrence frequency of which is greater than or equal to the preset frequency threshold, with a preset distance threshold, so as to select alarm codes the alarm-to-alarm distance of which is less than the preset distance threshold; and

combining the selected alarm codes in accordance with the distance to obtain the alarm group clustering set.

Alternatively, the step of mining a frequent path according to the alarm group clustering set and the connection strength includes:

comparing the connection strength of the alarm group clustering set with a preset connection strength threshold to select alarm codes the connection strength of which is greater than or equal to the preset connection strength threshold, and performing a path combination on the selected alarm codes which are associated to obtain the frequent path.

An alarm correlation data mining apparatus is provided. The alarm correlation data mining apparatus includes an extraction module, a generation module, an obtaining module and a mining module, where

the extraction module is arranged to obtain alarm data in a set range and extract an alarm code, a site ID, and a device ID from the alarm data;

the generation module is arranged to generate a matrix according to the extracted alarm code, site ID, and device ID, and obtain an alarm occurrence frequency, an alarm-to-alarm distance and a connection strength according to the generated matrix;

the obtaining module is arranged to obtain an alarm group clustering set according to the alarm occurrence frequency and the alarm-to-alarm distance; and

the mining module is arranged to mine a frequent path according to the alarm group clustering set and the connection strength.

Alternatively, the extraction module is arranged to obtain alarm data in the set range and extract the alarm code, site ID and device ID from the alarm data in the following way:

obtaining the alarm data within a set time and alarm data of a set device and extracting the alarm code, the site ID and the device ID.

Alternatively, the generation module is arranged to generate the matrix according to the extracted alarm code, site ID and device ID in the following way:

generating a transaction matrix in which the alarm code indicates a row where an element of the transaction matrix is located and the device ID or site ID indicates a column where the element is located, and generating an ergodic matrix in which the alarm code indicates a row where an element of the ergodic matrix is located and another alarm code indicates a column where the element of the ergodic matrix is located.

Alternatively, the obtaining module includes a frequency comparison unit, a distance comparison unit and a combining unit, where

the frequency comparison unit is arranged to compare the alarm occurrence frequency with a preset frequency threshold, so as to select alarm codes the alarm occurrence frequency of which is greater than or equal to the preset frequency threshold;

the distance comparison unit is arranged to compare the alarm-to-alarm distance with a preset distance threshold, so as to select alarm codes the alarm-to-alarm distance of which is less than the preset distance threshold; and

the combining unit is arranged to combine the selected alarm codes in accordance with the distance to obtain the alarm group clustering set.

Alternatively, the mining module is arranged to mine a frequent path according to the alarm group clustering set and the connection strength in the following way:

comparing the connection strength of the alarm group clustering set with a preset connection strength threshold to select alarm codes the connection strength of which is greater than or equal to the preset connection strength threshold, and performing a path combination on the selected alarm codes which are associated to obtain the frequent path.

A computer program includes program instructions, the program instructions, when being executed by a computer, cause the computer to carry out the above-described alarm correlation data mining method.

A carrier on which the above computer program is loaded, is provided.

According to the alarm correlation data mining method based on a frequent path provided by the embodiments of the present disclosure, obtaining alarm data in a set range and extracting the alarm code, site ID, and device ID; generating a matrix according to the extracted alarm code, site ID, and device ID and obtaining an alarm occurrence frequency, an alarm-to-alarm distance and a connection strength; obtaining an alarm group clustering set according to the alarm occurrence frequency and the alarm-to-alarm distance; and mining a frequent path according to the alarm group clustering set and the connection strength. The embodiment of the present disclosure effectively integrates alarm codes, alarm positions, time sequences and occurrence frequencies in conjunction with telecommunication alarm characteristics and a data mining algorithm, and proposes to store information of alarms in multiple dimensions with the matrix and a correlation relationship between the alarms is effectively and rapidly mined, thereby improving the operation and maintenance efficiency.

## BRIEF DESCRIPTION OF DRAWINGS

FIG. 1 is a schematic flow diagram of an alarm correlation data mining method according to a first embodiment of the present disclosure;

FIG. 2 is a schematic flow diagram of an alarm correlation data mining method according to a second embodiment of the present disclosure;

FIG. 3 is a detailed schematic flow diagram of a step of obtaining, as shown in Fig.1, an alarm group clustering set according to the alarm occurrence frequency and the alarm-to-alarm distance;

FIG. 4 is a schematic flow diagram of an alarm correlation data mining method according to a third embodiment of the present disclosure;

FIG. 5 is a schematic diagram showing functional modules of an alarm correlation data mining apparatus according to an embodiment of the present disclosure; and

FIG. 6 is a schematic diagram showing functional modules of an obtaining module in FIG. 5.

Object implementations, functional features and advantages of the present disclosure will be further described with reference to the accompanying drawings in conjunction with embodiments.

## DETAILED DESCRIPTION

It should be understood that specific embodiments described herein are merely illustrative of the present disclosure and are not intended to limit the present disclosure.

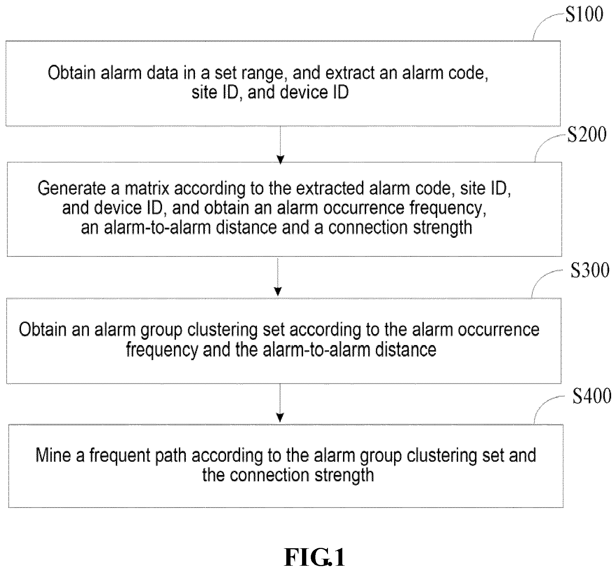

An embodiment of the present disclosure provides an alarm correlation data mining method. With reference to FIG. 1, FIG. 1 is a schematic flow diagram of an alarm correlation data mining method according to a first embodiment of the present disclosure. In the first embodiment, the alarm correlation data mining method according to the embodiment of the present disclosure includes the following steps.

In S100, alarm data in a set range is obtained and an alarm code, a site identity (ID), and a device ID are extracted.

Through an alarm correlation data mining apparatus, the alarm data in the set range which may be a set specific period of time or devices of a set specific type is obtained, and information such as a corresponding alarm code, site ID and device ID is extracted from the alarm data in the set range.

In S200, a matrix is generated according to the extracted alarm code, site ID, and device ID, and an alarm occurrence frequency, an alarm-to-alarm distance and a connection strength are obtained.

A corresponding matrix is generated by the alarm correlation data mining apparatus according to the extracted alarm code, site ID and device ID, where the generated matrix may be a transaction matrix or an ergodic matrix. The transaction matrix based on the device ID or site ID as follows, in which the alarm code indicates a row where an element of the transaction matrix is located and the device ID or site ID indicates a column where the element is located, is obtained:

$$M_{\mathrm{mxn}} = \begin{bmatrix} h_{11} & \dots & h_{1n} \\ \vdots & \ddots & \vdots \\ h_{m1} & \dots & h_{mn} \end{bmatrix}$$

The ergodic matrix is an alarm code-alarm code matrix in which an alarm code indicates a row where an element of ergodic matrix is located and another alarm code indicates a column where the element is located. On the basis of the alarm codes, an element $a_{ij}$ represents the number of times in all devices that an alarm firstly occurs and aj successively occurs within a time window range without other alarms between the two alarms.

$$A_t = \begin{bmatrix} a_{1,1} & \dots & a_{1,n+1} \\ \vdots & \ddots & \vdots \\ a_{n+1,1} & \dots & a_{n+1,n+1} \end{bmatrix}$$

Now, the transaction matrix is taken as an example to illustrate, in which $h_{ij}$ is the number of times that an alarm i occurs in a jth device. Each row vector represents an actual occurrence condition of the alarm i in all devices, thus the row vector represents the composition of the alarm and contains an alarm occurrence mode of the device. Column vectors represent different devices, and outline individualized characteristics of the devices. Therefore, a relevant alarm group clustering set can be obtained through measuring the similarity of the row vectors, and an inherent occurrence mode of the device, that is, a frequent path, can be obtained by means of further analysis.

A corresponding alarm occurrence frequency, a corresponding alarm-to-alarm distance and a corresponding connection strength are obtained from the generated matrixes. The alarm occurrence frequency is a total number of the alarm A among all alarms occurred in a device of a set type within a specified time range. The connection strength represents a total number within a specified time range that an alarm Ai actually occurs and an alarm Aj successively occurs within a time window in a certain device, among all alarms of devices of the same type or different devices under a same site, which is called a connection strength between Ai and Aj. In the present embodiment, the connection strength between Ai and Aj is recorded by the ergodic matrix, that is, an $A_{ij}$ value of A in the ergodic matrix. The alarm-to-alarm distance is defined by extracting two rows X, Y from the device ID-alarm code matrix. If Xi (or Yi) is greater than 0, let Xi (or Yi) equal to 1, then a page distance Hd (X, Y) between X and Y is defined as Hd (X, Y)=(Xi=1).

In S300, an alarm group clustering set is obtained according to the alarm occurrence frequency and the alarm-to-alarm distance.

The obtained alarm occurrence frequency and alarm-to-alarm distance are compared with a preset alarm occurrence frequency and a preset distance threshold by the alarm correlation data mining apparatus, so as to select satisfactory alarm codes, and combine the selected alarm codes in accordance with the distance to obtain the alarm group clustering set.

In S400, a frequent path is mined according to the alarm group clustering set and the connection strength.

The obtained alarm group clustering set and the connection strength are compared with a preset connection strength threshold by the alarm correlation data mining apparatus, so as to select alarm codes the connection strength of which is greater than or equal to the preset connection strength threshold, and perform path combination after the selected alarm codes being associated processed to obtain the frequent path.

In conjunction with telecommunication alarm characteristics and a data mining algorithm, the alarm correlation data mining method provided by the present embodiment effectively integrates alarm codes, alarm positions, time sequences and the number of occurrences, and proposes to store information of alarms in multiple dimensions with a matrix, so that a correlation relationship between the alarms is mined effectively and rapidly. Therefore, the operation and maintenance efficiency is improved.

Alternatively, the method may be based on the frequent path or based on other information, and the above method may be applied as long as the technical problem of the present disclosure can be solved.

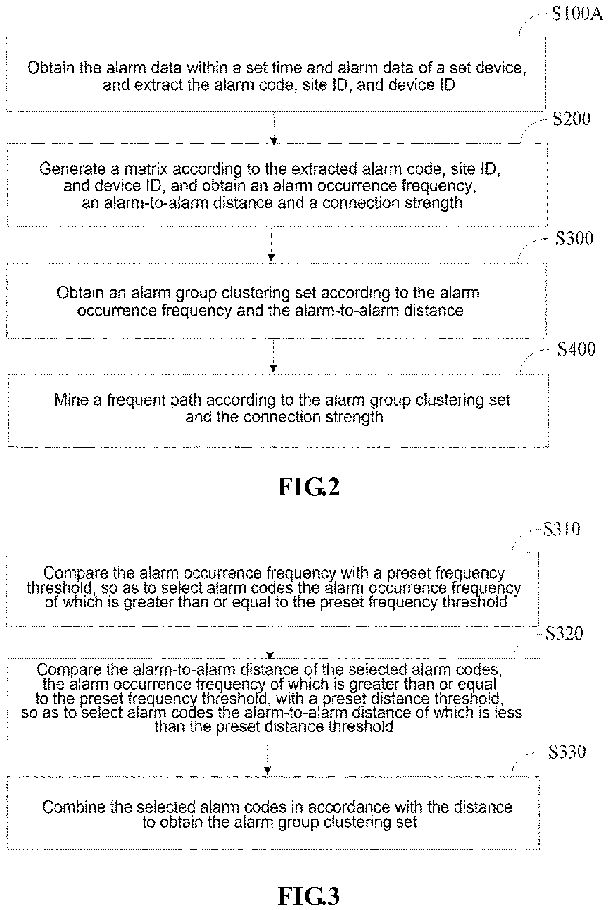

Further, with reference to FIG. 2, FIG. 2 is a schematic flow diagram of an alarm correlation data mining method based on a frequent path according to a second embodiment of the present disclosure. On the basis of the first embodiment, S100 includes the following step.

In S100A, the alarm data within a set time and alarm data of a set device are obtained and the alarm code, the site ID and the device ID are extracted.

Through an alarm correlation data mining apparatus based on a frequent path, alarm data within a set period of time and alarm data of devices of a set type are obtained, and information such as the alarm code, site ID and device ID are extracted from the alarm data.

Further, with reference to FIG. 3, in the alarm correlation data mining method based on a frequent path according to the present embodiment, S300 includes the following steps.

In S310, the alarm occurrence frequency is compared with a preset frequency threshold to select alarm codes the alarm occurrence frequency of which is greater than or equal to the preset frequency threshold.

Through an alarm correlation data mining apparatus based on a frequent path, the obtained alarm occurrence frequency is compared with the preset frequency threshold to select alarm codes the alarm occurrence frequency of which is greater than or equal to the preset frequency threshold.

In S320, the alarm-to-alarm distance is compared with a preset distance threshold to select alarm codes the alarm-to-alarm distance of which is less than the preset distance threshold.

After a first selection, the alarm correlation data mining apparatus based on a frequent path further compares the alarm-to-alarm distance with the preset distance threshold to select alarm codes the alarm-to-alarm distance of which is less than the preset distance threshold.

In S330, the selected alarm codes are combined in accordance with the distance to obtain the alarm group clustering set.

The alarm correlation data mining apparatus based on a frequent path combines, in accordance with the distance, the alarm codes obtained after two selections to obtain the alarm group clustering set. It will be illustrated below by way of an example.

In the transaction matrix, alarm codes of rows are identified as (alarm-1, alarm-2, alarm-3, alarm-4, alarm-5, alarm-6); and device IDs of columns are identified as (device-1, device-2, device-3, device-4, device-5, devic-6);

$$
\begin{array}{c}
\text{alarm - 1} \\
\text{alarm - 2} \\
\text{alarm - 3} \\
\text{alarm - 4} \\
\text{alarm - 5} \\
\text{alarm - 6}
\end{array}
\begin{bmatrix}
1 & 0 & 0 & 0 & 0 & 2 \\
1 & 0 & 0 & 0 & 0 & 0 \\
1 & 2 & 1 & 0 & 0 & 2 \\
1 & 2 & 1 & 1 & 1 & 0 \\
0 & 0 & 1 & 3 & 1 & 0 \\
3 & 1 & 1 & 3 & 1 & 0
\end{bmatrix}
$$

Occurrence frequencies of all alarms (alarm-1 to alarm-6) are obtained by means of calculation, that is, (3, 1, 6, 6, 5, 9), a distance threshold is set to be equal to 4, and all alarms the alarm occurrence frequencies of which are greater than 4 are found. In this case, a frequent alarm set is {alarm-3, alarm-4, alarm-5, alarm-6}, a corresponding matrix is extracted and a non-zero value is set to be 1:

$$
\begin{array}{c}
\text{alarm - 3} \\
\text{alarm - 4} \\
\text{alarm - 5} \\
\text{alarm - 6}
\end{array}
\begin{bmatrix}
1 & 2 & 1 & 0 & 0 & 2 \\
1 & 2 & 1 & 1 & 1 & 0 \\
0 & 0 & 1 & 3 & 1 & 0 \\
3 & 1 & 1 & 3 & 1 & 0
\end{bmatrix}
\Rightarrow
\begin{bmatrix}
1 & 1 & 1 & 0 & 0 & 1 \\
1 & 1 & 1 & 1 & 1 & 0 \\
0 & 0 & 1 & 1 & 1 & 0 \\
1 & 1 & 1 & 1 & 1 & 0
\end{bmatrix}
$$

A distance between frequent pages is calculated as follows:

$$d(\text{alarm-3, alarm-4})=1$$

$$d(\text{alarm-3, alarm-5})=3$$

$$d(\text{alarm-3, alarm-6})=1$$

$$d(\text{alarm-4, alarm-5})=2$$

$$d(\text{alarm-4, alarm-6})=0$$

$$d(\text{alarm-5, alarm-6})=0$$

A distance threshold is set to be equal to 2, distances less than 2 are selected and combined to obtain following two sets:

d(alarm-3, alarm-4) and d(alarm-3, alarm-6), which are equal to 1, are selected to obtain one of the two sets, that is, an alarm set (alarm-3, alarm-4, alarm-6).

d(alarm-4, alarm-6) and d(alarm-5, alarm-6), which are equal to 0, are selected to obtain the other one of the two sets, that is, an alarm set (alarm-4, alarm-5, alarm-6).

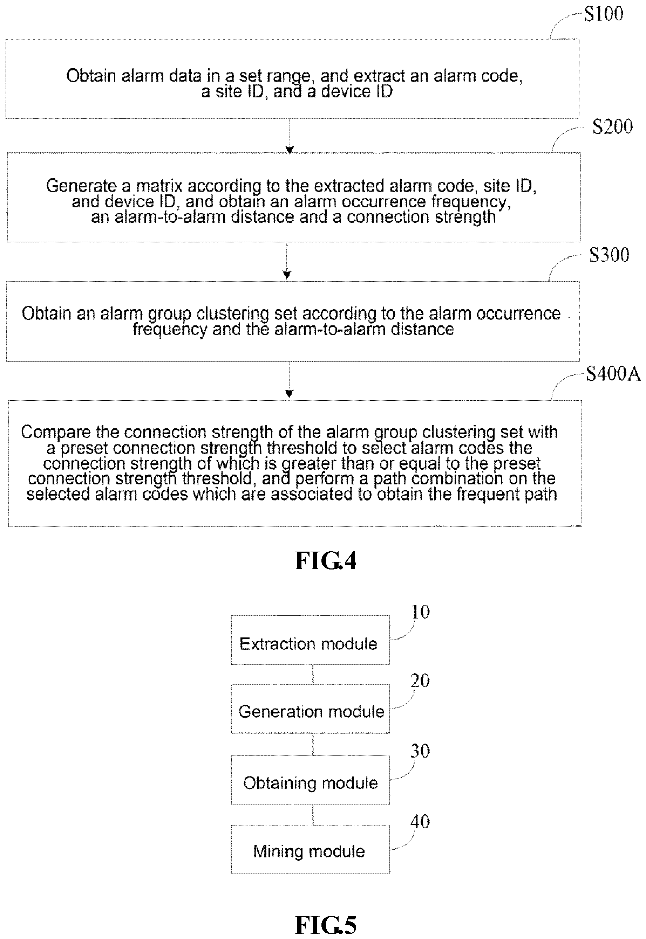

Further, with reference to FIG. 4, in the alarm correlation data mining method based on a frequent path according to the present embodiment, S400 includes the following step.

In S400A, the connection strength of the alarm group clustering set is compared with a preset connection strength threshold to select alarm codes the connection strength of which is greater than or equal to the preset connection strength threshold, and a path combination is performed on the selected associated alarm codes to obtain the frequent path.

Through the alarm correlation data mining apparatus based on a frequent path, the connection strength of the alarm group clustering set is compared with the preset connection strength threshold to select alarm codes the connection strength of which is greater than or equal to the preset connection strength threshold, and performs the path combination on the selected associated alarm codes to obtain the frequent path. An example will be described below.

After obtaining the alarm group clustering set, the alarm correlation data mining apparatus based on a frequent path starts a path mining operation. Assuming that the clustering set is {alarm-1, alarm-2, ..., alarm-n}, rows and columns corresponding to alarm-1, alarm-2, ..., alarm-n are extracted from the ergodic matrix to form a matrix $N[n][n]$, and in the matrix N, all $N[i][j]$s the connection strength of which is greater than or equal to the connection strength threshold are found, (alarm-i, alarm-j) is regarded as a frequent path if the connection strength of $N[i][j]$ is greater than or equal to the connection strength threshold, and all the frequent paths the length of which is equal to 2 are combined to obtain a frequent path the length of which is equal to 3, until the frequent paths cannot be combined. In this way, the frequent path is obtained.

Specifically, an ergodic matrix corresponding to a session matrix is as follows:

$$\begin{bmatrix} 1 & 0 & 0 & 0 & 0 & 2 \\ 1 & 0 & 0 & 0 & 0 & 0 \\ 1 & 2 & 1 & 0 & 0 & 2 \\ 1 & 2 & 1 & 1 & 1 & 0 \\ 0 & 0 & 1 & 3 & 1 & 0 \\ 3 & 1 & 1 & 3 & 1 & 0 \end{bmatrix}$$

{alarm-3, alarm-4, alarm-6} and {alarm-4, alarm-5, alarm-6} may be obtained according to a result illustrated in S300, and a new matrix is created by extracting corresponding rows and columns as follows:

$$\text{alarm-3} \begin{pmatrix} 3 & 4 & 6 \end{pmatrix}$$

$$N-1 = \begin{matrix} 3 \\ 4 \\ 6 \end{matrix} \begin{bmatrix} 0 & 4 & 0 \\ 0 & 0 & 2 \\ 0 & 0 & 0 \end{bmatrix}$$

$$\text{alarm-3} \begin{pmatrix} 4 & 5 & 6 \end{pmatrix}$$

$$N-2 = \begin{matrix} 4 \\ 5 \\ 6 \end{matrix} \begin{bmatrix} 0 & 3 & 2 \\ 0 & 0 & 5 \\ 0 & 0 & 0 \end{bmatrix}$$

Assuming that the connection strength threshold is equal to 3, a frequent path {<alarms-3, alam-4>} the connection strength of which is greater than or equal to 3 is selected from N-1; a frequent path {<alarms-4, alarm-5>, <alarm-5, alarm-6>} the connection strength of which is greater than or equal to 3 is selected from N-2, and then combined to obtain a frequent path {<alarms-4, alarm-5, alarm-6>} . Therefore, the frequent path {<alarms-3, alarm-4>, <alarm-4, alarm-5, alarm-6>} is obtained.

Accordingly, an inherent occurrence mode between the alarms is mined through the frequent path. The alarm correlation data mining apparatus based on a frequent path can set a correlation rule according to the mined inherent mode. For example, if alarm-4 occurs, it is determined according to the inherent occurrence mode for alarms that, alarm-5 and alarm-6 may successively occur within a time window. Alarm-4 may be set as a main alarm and alarm-5, alarm-6 are set as secondary alarms according to the correlation rule. In this way, the amount of the alarms may be reduced, and the operation and maintenance personnel may conveniently analyze a root alarm.

As shown in FIG. 5, an embodiment of the present disclosure further provides an alarm correlation data mining apparatus. The alarm correlation data mining apparatus based on a frequent path includes:

an extraction module 10, arranged to obtain alarm data in a set range, and extract an alarm code, a site ID, and a device ID;
a generation module 20, arranged to generate a matrix according to the extracted alarm code, site ID, and device ID, and obtain an alarm occurrence frequency, an alarm-to-alarm distance and a connection strength;
an obtaining module 30, arranged to obtain an alarm group clustering set according to the alarm occurrence frequency and the alarm-to-alarm distance; and
a mining module 40, arranged to mine a frequent path according to the alarm group clustering set and the connection strength.

The extraction module 10 of the alarm correlation data mining apparatus based on a frequent path obtains the alarm data in the set range, where the set range may be a set specific period of time or devices of a set specific type; and extracts information such as a corresponding alarm code, site ID and device ID from the alarm data in the set range.

The generation module 20 of the alarm correlation data mining apparatus based on a frequent path generates a corresponding matrix according to the extracted alarm code, site ID and device ID, where the generated matrix may be a transaction matrix or a ergodic matrix. A transaction matrix based on the device ID or site ID as follows, in which the alarm code indicates a row where an element of the transaction matrix is located and the device ID or site ID indicates a column where the element is located, is obtained:

$$M_{m \times n} = \begin{bmatrix} h_{11} & \dots & h_{1n} \\ \vdots & \ddots & \vdots \\ h_{m1} & \dots & h_{mn} \end{bmatrix}$$

The ergodic matrix is an alarm code-alarm code matrix in which an alarm code indicates a row where an element of ergodic matrix is located and another alarm code indicates a column where the element is located. On the basis of the alarm codes, an element $a_{ij}$ represents the number of times in all devices that an alarm ai firstly occurs and aj successively occurs within a time window range without other alarms between the two alarms.

$$A_t = \begin{bmatrix} a_{1,1} & \dots & a_{1,n+1} \\ \vdots & \ddots & \vdots \\ a_{n+1,1} & \dots & a_{n+1,n+1} \end{bmatrix}$$

Now, the transaction matrix is taken as an example to illustrate, in which $h_{ij}$ is the number of times that an alarm i occurs in a jth device. Each row vector represents an actual occurrence condition of the alarm i in all devices, thus the row vector represents the composition of the alarm and contains an alarm occurrence mode of the device. Column vectors represent different devices, and outline individualized characteristics of the devices. Therefore, a relevant alarm group clustering set can be obtained through measuring the similarity of the row vectors, and an inherent occurrence mode of the device, that is, a frequent path, can be obtained by means of further analysis.

A corresponding alarm occurrence frequency, alarm-to-alarm distance and connection strength are obtained from the generated matrixes. The alarm occurrence frequency is a total number of the alarm A among all alarms occurred in a device of a set type within a specified time range. The connection strength represents a total number within a specified time range that an alarm Ai actually occurs and an alarm Aj successively occurs within a time window in a certain device, among all alarms of devices of the same type or different devices under a same site, which is called a connection strength between Ai and Aj. In the present embodiment, the connection strength between Ai and Aj is recorded by the ergodic matrix, that is, an Aij value of A in the ergodic matrix. The alarm-to-alarm distance is defined by extracting two rows X, Y from the device ID-alarm code matrix. If Xi (or Yi) is greater than 0, let Xi (or Yi) equal to 1, then a page distance Hd (X, Y) between X and Y is defined as Hd (X, Y)=(Xi=1).

The obtaining module 30 of the alarm correlation data mining apparatus based on a frequent path compares the obtained alarm occurrence frequency and alarm-to-alarm distance with a preset alarm occurrence frequency and a preset distance threshold to select satisfactory alarm codes, and combines the selected alarm codes in accordance with the distance to obtain the alarm group clustering set.

The mining module 40 of the alarm correlation data mining apparatus based on a frequent path compares the obtained alarm group clustering set and the connection strength with a preset connection strength threshold to select alarm codes the connection strength of which is greater than or equal to the preset connection strength threshold, and performs path combination on the selected alarm codes subjected to a correlation process to obtain the frequent path.

In conjunction with telecommunication alarm characteristics and a data mining algorithm, the alarm correlation data mining apparatus based on a frequent path according to the present embodiment effectively integrates alarm codes, alarm positions, time sequences and the number of occurrences, and proposes to store information of alarms in multiple dimensions with a matrix, so that a correlation relationship between the alarms is mined effectively and rapidly. Therefore, the operation and maintenance efficiency is improved.

Further, with reference to FIG. 5, in the alarm correlation data mining apparatus provided by the present embodiment, the extraction module 10 is further arranged to obtain the alarm data within a set time and alarm data of set devices, and extract the alarm code, the site ID and the device ID.

The extraction module 10 of the alarm correlation data mining apparatus obtains alarm data within a set period of time and alarm data of devices of a set type, and extracts the alarm code, site ID and device ID from the alarm data.

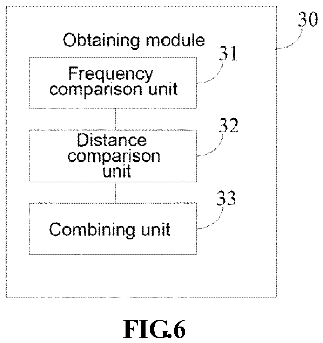

As shown in FIG. 6, in the alarm correlation data mining apparatus provided by the present embodiment, the obtaining module 30 includes:

a frequency comparison unit 31, arranged to compare the alarm occurrence frequency with a preset frequency threshold to select an alarm code the alarm occurrence frequency of which is greater than or equal to the preset frequency threshold;

a distance comparison unit 32, arranged to compare the alarm-to-alarm distance with a preset distance threshold to select an alarm code the alarm-to-alarm distance of which is less than the preset distance threshold; and

a combining unit 33, arranged to combine the selected alarm codes in accordance with the distance to obtain the alarm group clustering set.

The alarm correlation data mining apparatus compares the obtained alarm occurrence frequency with the preset frequency threshold to select alarm codes the alarm occurrence frequency of which is greater than or equal to the preset frequency threshold.

The alarm correlation data mining apparatus further compares the alarm-to-alarm distance with the preset distance threshold after the first selection, so as to select alarm codes the alarm-to-alarm distance of which is less than the preset distance threshold.

The alarm correlation data mining apparatus combines, in accordance with the distance, the alarm codes obtained after two selections to obtain the alarm group clustering set. It will be illustrated below by way of an example.

In the transaction matrix, alarm codes of rows are identified as (alarm-1, alarm-2, alarm-3, alarm-4, alarm-5, alarm-6); and device IDs of columns are identified as (device-1, device-2, device-3, device-4, device-5, devic-6);

$$
\begin{array}{r}
\text{alarm - 1} \\
\text{alarm - 2} \\
\text{alarm - 3} \\
\text{alarm - 4} \\
\text{alarm - 5} \\
\text{alarm - 6}
\end{array}
\begin{bmatrix}
1 & 0 & 0 & 0 & 0 & 2 \\
1 & 0 & 0 & 0 & 0 & 0 \\
1 & 2 & 1 & 0 & 0 & 2 \\
1 & 2 & 1 & 1 & 1 & 0 \\
0 & 0 & 1 & 3 & 1 & 0 \\
3 & 1 & 1 & 3 & 1 & 0
\end{bmatrix}
$$

Occurrence frequencies of all alarms (alarm-1 to alarm-6) are obtained by means of calculation, that is, (3, 1, 6, 6, 5, 9), a distance threshold is set to be equal to 4, and all alarms the alarm occurrence frequencies of which are greater than 4 are found. In this case, a frequent alarm set is {alarm-3, alarm-4, alarm-5, alarm-6}, a corresponding matrix is extracted and a non-zero value is set to be 1:

$$
\begin{array}{r}
\text{alarm - 3} \\
\text{alarm - 4} \\
\text{alarm - 5} \\
\text{alarm - 6}
\end{array}
\begin{bmatrix}
1 & 2 & 1 & 0 & 0 & 2 \\
1 & 2 & 1 & 1 & 1 & 0 \\
0 & 0 & 1 & 3 & 1 & 0 \\
3 & 1 & 1 & 3 & 1 & 0
\end{bmatrix}
\Rightarrow
\begin{bmatrix}
1 & 1 & 1 & 0 & 0 & 1 \\
1 & 1 & 1 & 1 & 1 & 0 \\
0 & 0 & 1 & 1 & 1 & 0 \\
1 & 1 & 1 & 1 & 1 & 0
\end{bmatrix}
$$

A distance between frequent pages is calculated as follows:

$$d(\text{alarm-3, alarm-4})=1$$

$$d(\text{alarm-3, alarm-5})=3$$

$$d(\text{alarm-3, alarm-6})=1$$

$$d(\text{alarm-4, alarm-5})=2$$

$$d(\text{alarm-4, alarm-6})=0$$

$$d(\text{alarm-5, alarm-6})=0$$

A distance threshold is set to be equal to 2, distances less than 2 are selected and combined to obtain following two sets:

d(alarm-3, alarm-4) and d(alarm-3, alarm-6), which are equal to 1, are selected to obtain one of the two sets, that is, an alarm set (alarm-3, alarm-4, alarm-6).

d(alarm-4, alarm-6) and d(alarm-5, alarm-6), which are equal to 0, are selected to obtain the other one of the two sets, that is, an alarm set (alarm-4, alarm-5, alarm-6).

Further, with reference to FIG. 5, the mining module 40 is further arranged to compare the connection strength of the alarm group clustering set with a preset connection strength threshold to select alarm codes the connection strength of which is greater than or equal to the preset connection strength threshold, and perform path combination on the selected associated alarm codes to obtain the frequent path.

The mining module 40 of the alarm correlation data mining apparatus is arranged to compare the connection strength of the alarm group clustering set with the preset connection strength threshold to select alarm codes the connection strength of which is greater than or equal to the preset connection strength threshold, and perform path combination on the selected associated alarm codes to obtain the frequent path. It will be illustrated below by way of an example.

The mining module 40 of the alarm correlation data mining apparatus starts a path mining operation after obtaining the alarm group clustering set. Assuming that the clustering set is {alarm-1, alarm-2, ..., alarm-n}, rows and columns corresponding to alarm-1, alarm-2, ..., alarm-n are extracted from the ergodic matrix to form a matrix N[n][n], and in the matrix N, all N[i][j]s the connection strength of which is greater than or equal to the connection strength threshold are found. (alarm-i, alarm-j) is regarded as a frequent path if the connection strength of N[i][j] is greater than or equal to the connection strength threshold, and all the frequent paths the length of which is equal to 2 are combined to obtain a frequent path the length of which is equal to 3, until the frequent paths cannot be combined. In this way, the frequent path is obtained.

Specifically, an ergodic matrix corresponding to a session matrix is as follows:

$$\begin{bmatrix} 1 & 0 & 0 & 0 & 0 & 2 \\ 1 & 0 & 0 & 0 & 0 & 0 \\ 1 & 2 & 1 & 0 & 0 & 2 \\ 1 & 2 & 1 & 1 & 1 & 0 \\ 0 & 0 & 1 & 3 & 1 & 0 \\ 3 & 1 & 1 & 3 & 1 & 0 \end{bmatrix}$$

{alarm-3, alarm-4, alarm-6} and alarm-4, alarm-5, alarm-6} may be obtained according to a result illustrated in S300, and a new matrix is created by extracting corresponding rows and columns as follows:

$$N-1 = \begin{array}{c} \\ 3 \\ 4 \\ 6 \end{array} \begin{array}{ccc} \text{alarm-3} & (3 & 4 & 6) \\ \begin{bmatrix} 0 & 4 & 0 \\ 0 & 0 & 2 \\ 0 & 0 & 0 \end{bmatrix} \end{array}$$

$$N-2 = \begin{array}{c} \\ 4 \\ 5 \\ 6 \end{array} \begin{array}{ccc} \text{alarm-3} & (4 & 5 & 6) \\ \begin{bmatrix} 0 & 3 & 2 \\ 0 & 0 & 5 \\ 0 & 0 & 0 \end{bmatrix} \end{array}$$

Assuming that the connection strength threshold is equal to 3, a frequent path {<alarms-3, alam-4>} the connection strength of which is greater than or equal to 3 is selected from N-1; a frequent path {<alarms-4, alarm-5>, <alarm-5, alarm-6>} the connection strength of which is greater than or equal to 3 is selected from N-2, and then combined to obtain a frequent path {<alarms-4, alarm-5, alarm-6>}. Therefore, the frequent path {<alarms-3, alarm-4>, <alarm-4, alarm-5, alarm-6>} is obtained. Accordingly, an inherent occurrence mode between the alarms is mined through the frequent path. The alarm correlation data mining apparatus can set a correlation rule according to the mined inherent mode. For example, if alarm-4 occurs, it is determined according to the inherent occurrence mode for alarms that, alarm-5 and alarm-6 may successively occur within a time window. Alarm-4 may be set as a main alarm and alarm-5, alarm-6 are set as secondary alarms according to the correlation rule. In this way, the amount of the alarms may be reduced, and the operation and maintenance personnel may conveniently analyze a root alarm.

Alternatively, the apparatus of the present disclosure may be based on a frequent path or may be based on other information, and the above-described apparatus may be applied as long as the technical problem of the present disclosure can be solved.

An embodiment of the present disclosure further discloses a computer program including a program instruction which enables a computer to carry out any of the above-described alarm correlation data mining method when the program instruction is executed by a computer.

An embodiment of the present disclosure further provides a carrier on which the above computer program is loaded.

The foregoing is merely a preferred embodiment of the present disclosure and is not intended to limit the scope of the present disclosure, and either equivalent structures or equivalent process transformations made by using contents of the specification and the accompanying drawings of the present disclosure or directly or indirectly applied in other related technical fields are included within the scope of patent protection of the present disclosure in a similar way.

**Industrial Applicability**

According to the alarm correlation data mining method provided by the embodiments of the present disclosure, alarm data in a set range is obtained and the alarm code, site ID, and device ID are extracted; the matrixes are generated according to the extracted alarm codes, the site IDs, and device IDs, and the alarm occurrence frequency, alarm-to-alarm distance and connection strength are obtained; the alarm group clustering set is obtained according to the alarm occurrence frequency and the alarm-to-alarm distance; and the frequent path is mined according to the alarm group clustering set and the connection strength. The embodiment of the present disclosure effectively integrates alarm codes, alarm positions, time sequences and occurrence frequencies in conjunction with telecommunication alarm characteristics and a data mining algorithm, and proposes to store alarm information in multiple dimensions with the matrixes and effectively and rapidly mine a correlation relationship between the alarms, thereby improving the operation and maintenance efficiency. Therefore, the present disclosure possesses strong industrial applicability.

**Claims**

**1.** An alarm correlation data mining method, comprising:

obtaining alarm data in a set range and extracting an alarm code, a site identity (ID), and a device ID from the alarm data;

generating a matrix according to the extracted alarm code, site ID, and device ID, and obtaining an alarm occurrence frequency, an alarm-to-alarm distance and a connection strength according to the generated matrix;

obtaining an alarm group clustering set according to the alarm occurrence frequency and the alarm-to-alarm distance; and

mining a frequent path according to the alarm group clustering set and the connection strength.

**2.** The alarm correlation data mining method according to claim 1, wherein

the set range comprises a set time and a set device;

the step of obtaining alarm data in a set range and extracting an alarm code, a site ID, and a device ID from the alarm data comprises:

obtaining the alarm data within the set time and the alarm data of the set device, and extracting the alarm code, the site ID and the device ID from the alarm data.

**3.** The alarm correlation data mining method according to claim 1, wherein

the matrix comprises a transaction matrix and an ergodic matrix;

the step of generating a matrix according to the extracted alarm code, site ID, and device ID, and obtaining an alarm occurrence frequency, an alarm-to-alarm distance and a connection strength according to the generated matrix comprises:

generating the transaction matrix in which the alarm code indicates a row where an element of the transaction matrix is located and the device ID or site ID indicates a column where the element is located, and generating the ergodic matrix in which the alarm code indicates a row where an element of the ergodic matrix is located and another alarm code indicates a column where the element of the ergodic matrix is located.

4. The alarm correlation data mining method according to claim 1, wherein the step of obtaining an alarm group clustering set according to the alarm occurrence frequency and the alarm-to-alarm distance comprises:

comparing the alarm occurrence frequency with a preset frequency threshold, so as to select alarm codes the alarm occurrence frequency of which is greater than or equal to the preset frequency threshold; comparing the alarm-to-alarm distance of the selected alarm code, the alarm occurrence frequency of which is greater than or equal to the preset frequency threshold, with a preset distance threshold, so as to select alarm codes the alarm-to-alarm distance of which is less than the preset distance threshold; and combining the selected alarm codes in accordance with the distance, so as to obtain the alarm group clustering set.

5. The alarm correlation data mining method according to any one of claims 1 to 4, wherein the step of mining a frequent path according to the alarm group clustering set and the connection strength comprises:

comparing the connection strength of the alarm group clustering set with a preset connection strength threshold to select alarm codes the connection strength of which is greater than or equal to the preset connection strength threshold, and performing a path combination on the selected alarm codes which are associated to obtain the frequent path.

6. An alarm correlation data mining apparatus, comprising an extraction module, a generation module, an obtaining module and a mining module, wherein

the extraction module is arranged to obtain alarm data in a set range, and extract an alarm code, a site identity (ID), and a device ID from the alarm data; the generation module is arranged to generate a matrix according to the extracted alarm code, site ID, and device ID, and obtain an alarm occurrence frequency, an alarm-to-alarm distance and a connection strength according to the generated matrix; the obtaining module is arranged to obtain an alarm group clustering set according to the alarm occurrence frequency and the alarm-to-alarm distance; and the mining module is arranged to mine a frequent path according to the alarm group clustering set and the connection strength.

7. The alarm correlation data mining apparatus according to claim 6, wherein the extraction module is arranged to obtain the alarm data in the set range and extract the alarm code, site ID and device ID from the alarm data in the following way:

obtaining the alarm data within a set time and alarm data of a set device, and extracting the alarm code, the site ID and the device ID.

8. The alarm correlation data mining apparatus according to claim 6, wherein the generation module is arranged to generate the matrix according to the extracted alarm code, site ID and device ID in the following way:

generating a transaction matrix in which the alarm code indicates a row where an element of the transaction matrix is located and the device ID or site ID indicates a column where the element is located, and generating an ergodic matrix in which the alarm code indicates a row where an element of the ergodic matrix is located and another alarm code indicates a column where the element of the ergodic matrix is located.

9. The alarm correlation data mining method according to claim 6, wherein the obtaining module comprises a frequency comparison unit, a distance comparison unit and a combining unit, wherein

the frequency comparison unit is arranged to compare the alarm occurrence frequency with a preset frequency threshold, so as to select alarm codes the alarm occurrence frequency of which is greater than or equal to the preset frequency threshold; the distance comparison unit is arranged to compare the alarm-to-alarm distance with a preset distance threshold, so as to select alarm codes the alarm-to-alarm distance of which is less than the preset distance threshold; and

the combining unit is arranged to combine the selected alarm codes in accordance with the distance to obtain the alarm group clustering set.

10. The alarm correlation data mining method according to any one of claims 6 to 9, wherein the mining module is arranged to mine the frequent path according to the alarm group clustering set and the connection strength in the following way:

comparing the connection strength of the alarm group clustering set with a preset connection strength threshold to select alarm codes the connection strength of which is greater than or equal to the preset connection strength threshold, and performing a path combination on the selected alarm codes which are associated to obtain the frequent path.

11. A computer program comprising program instructions, the program instructions, when being executed by a computer, cause the computer to carry out the alarm correlation data mining method according to any one of claims 1 to 5.

12. A carrier on which the computer program according to claim 11 is loaded.

S100

Obtain alarm data in a set range, and extract an alarm code, site ID, and device ID

S200

Generate a matrix according to the extracted alarm code, site ID, and device ID, and obtain an alarm occurrence frequency, an alarm-to-alarm distance and a connection strength

S300

Obtain an alarm group clustering set according to the alarm occurrence frequency and the alarm-to-alarm distance

S400

Mine a frequent path according to the alarm group clustering set and the connection strength

## FIG.1

S100A

Obtain the alarm data within a set time and alarm data of a set device, and extract the alarm code, site ID, and device ID

S200

Generate a matrix according to the extracted alarm code, site ID, and device ID, and obtain an alarm occurrence frequency, an alarm-to-alarm distance and a connection strength

S300

Obtain an alarm group clustering set according to the alarm occurrence frequency and the alarm-to-alarm distance

S400

Mine a frequent path according to the alarm group clustering set and the connection strength

## FIG.2

S310

Compare the alarm occurrence frequency with a preset frequency threshold, so as to select alarm codes the alarm occurrence frequency of which is greater than or equal to the preset frequency threshold

S320

Compare the alarm-to-alarm distance of the selected alarm codes, the alarm occurrence frequency of which is greater than or equal to the preset frequency threshold, with a preset distance threshold, so as to select alarm codes the alarm-to-alarm distance of which is less than the preset distance threshold

S330

Combine the selected alarm codes in accordance with the distance to obtain the alarm group clustering set

## FIG.3

S100

Obtain alarm data in a set range, and extract an alarm code,
a site ID, and a device ID

S200

Generate a matrix according to the extracted alarm code, site ID,
and device ID, and obtain an alarm occurrence frequency,
an alarm-to-alarm distance and a connection strength

S300

Obtain an alarm group clustering set according to the alarm occurrence
frequency and the alarm-to-alarm distance

S400A

Compare the connection strength of the alarm group clustering set with
a preset connection strength threshold to select alarm codes the
connection strength of which is greater than or equal to the preset
connection strength threshold, and perform a path combination on the
selected alarm codes which are associated to obtain the frequent path

**FIG.4**

10

Extraction module

20

Generation module

30

Obtaining module

40

Mining module

**FIG.5**

Obtaining module

Frequency
comparison unit
31

Distance
comparison
unit
32

Combining unit
33

30

**FIG.6**

# INTERNATIONAL SEARCH REPORT

| International application No. |
|---|
| **PCT/CN2014/091688** |

### A.    CLASSIFICATION OF SUBJECT MATTER

H04L 12/24 (2006.01) i

According to International Patent Classification (IPC) or to both national classification and IPC

### B.    FIELDS SEARCHED

Minimum documentation searched (classification system followed by classification symbols)

H04L 12/-

Documentation searched other than minimum documentation to the extent that such documents are included in the fields searched

Electronic data base consulted during the international search (name of data base and, where practicable, search terms used)

CNABS, CNTXT, CNKI: alarm, warn, notify, remind, correlate, code, ID, identify, matrix, frequency, distance, intensity, clustering, aggregation, set, path

VEN: alarm+, alert+, warn+, remind+, notif+, caution+, correlat+, code, ID, identif+, matrix, frequency, distance, intensity, clustering, aggregation, set, path

### C.    DOCUMENTS CONSIDERED TO BE RELEVANT

| Category* | Citation of document, with indication, where appropriate, of the relevant passages | Relevant to claim No. |
|---|---|---|
| A | CN 101277218 A (ZTE CORP.), 01 October 2008 (01.10.2008), the whole document | 1-12 |
| A | CN 101808015 A (POTEVIO INSTITUTE OF TECHNOLOGY CO., LTD.), 18 August 2010 (18.08.2010), the whole document | 1-12 |
| A | CN 101577636 A (ZTE CORP.), 11 November 2009 (11.11.2009), the whole document | 1-12 |

☐ Further documents are listed in the continuation of Box C.      ☒ See patent family annex.

| *      Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 23 June 2015 (23.06.2015) | **29 June 2015 (29.06.2015)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**ZHANG, Zhen**<br><br>Telephone No.: (86-10) **62089133** |

Form PCT/ISA/210 (second sheet) (July 2009)

## INTERNATIONAL SEARCH REPORT
### Information on patent family members

| | International application No. |
| --- | --- |
| | **PCT/CN2014/091688** |

| Patent Documents referred in the Report | Publication Date | Patent Family | Publication Date |
| --- | --- | --- | --- |
| CN 101277218 A | 01 October 2008 | CN 101277218 B | 29 December 2010 |
| CN 101808015 A | 18 August 2010 | CN 101808015 B | 18 April 2012 |
| CN 101577636 A | 11 November 2009 | CN 101577636 B | 25 July 2012 |
| | | EP 2439877 A1 | 11 April 2012 |
| | | WO 2010139146 A1 | 09 December 2010 |
| | | IN 201200130P4 P4 | 02 November 2012 |

Form PCT/ISA/210 (patent family annex) (July 2009)